# EUROPEAN PATENT SPECIFICATION

(11) **EP 2 239 892 B1**
(45) Date of publication and mention of the grant of the patent: **10.09.2014**
(21) Application number: 07855968.9
(22) Date of filing: 29.12.2007
(51) Int. Cl.: H04L 12/28, H04L 12/24, H04L 12/70, H04N 7/22, H04Q 11/00

(54) **METHOD AND DEVICE FOR REALIZING A CENTRALIZED CONTROL ON IPTV SERVICE**
VERFAHREN UND EINRICHTUNG ZUR REALISIERUNG EINER ZENTRALISIERTEN STEUERUNG EINES IPTV-DIENSTES
PROCÉDÉ ET DISPOSITIF POUR UNE COMMANDE DE SERVICE IPTV CENTRALISÉE

(43) Date of publication of application: 13.10.2010
(73) Proprietor: ZTE Corporation, Shenzhen, Guangdong 518057 (CN)
(72) Inventor: CHEN, Aimin, Guangdong 518057 (CN)
(74) Representative: Hatzmann, Martin
(86) International application number: PCT/CN2007/003970
(87) International publication number: WO 2009/086676

(56) References cited:
- EP-A1- 1 670 174
- EP-A2- 1 670 280
- EP-A2- 1 670 280
- WO-A1-2007/093100
- CN-A- 1 416 239
- CN-A- 1 744 570
- CN-A- 101 048 009
- US-A1- 2005 058 118
- US-A1- 2007 180 142
- US-A1- 2007 230 480

## Description

### Field of the Invention

The present invention relates to xPON network communication field, in particular to a method and device for centralized controlling IPTV service, which is utilized in the xPON network for centralized controlling the user ports on the optical network unit side by the optical line terminal.

### Background of the Invention

As the development of the xPON technology, benefited from high bandwidth of the xPON, IPTV service also develops rapidly. Based on the real IPTV application scenario, centralized control using optical line terminal (OLT) is a major service control manner, but after the user IGMP Join packet passes through the optical network unit (ONU), there is no protocol field carrying user port, therefore how the OLT identifies the user port of the ONU is a key problem relating to IPTV service application.

Aiming at the problem, EPON Communication Specification by China Telecommunication proposed the manner that CVLAN is added to the IGMP Join packet at the ONU for identifying the user port of the ONU, so as to realize OLT identifying the user port of ONU. However, by this technology, networking is inflexible, and there is compatible problem upon interfacing the ONU and OLT from different manufacturers.

EP1670280A2 relates to delivery of IP video content via a passive optical network (PON). WO2007/093100A1 relates to a method for binding the address of the user terminal in the access equipment; US2007/180142A1 relates to public network access, more specifically, to a server, system and method for providing access to a public network through an internal network of a multi-system operator; CN1416239A relates to a method for accessing VLAN in HFC accessing network; US2007/230480A1 relates to a method and system for controlling quality of service of IP packets in a passive optical network system to allow quality of service of transfer of IP packets to be ensured in the passive optical network system; CN1744570A relates to a method for realizing efficient video multicasting in Ethernet passive optical network system; US2005/058118A1 relates to a method and apparatus for forwarding packets in an Ethernet passive optical network.

### Summery of the Invention

In view of the above problem, the present invention provides a centralized control method and device for IPTV service, which utilize the user port information carried by PPPOE+ and DHCP Option82 protocols of the ONU to realize that IPTV identifies the user port of the ONU at the OLT, and thus the OLT realizes a centralized control on the IPTV service.

According to one aspect of the present invention, a method for realizing centralized control on IPTV service is provided, which comprises the following steps, step 1, when a user initiates a service interaction, the ONU acquires user port information of the user, puts the user port information into an interacting allocation protocol packet and sends the packet to the OLT; step 2, the OLT extracts the user port information according to the received interacting allocation protocol packet, and generates opposite end associated information according to the user port information; step 3, the OLT stores the opposite end associated information into a media access control (MAC) address database using a data packet identifier of the interacting allocation protocol packet as an index; and step 4, upon receiving an IPTV service request packet sent by the user port of the ONU, the OLT queries the MAC address database to obtain the user port information according to the data packet identifier of the IPTV service request packet, and thus the OLT realizing the centralized control of the user ports on the ONU.

Wherein, the interacting allocation protocol packet is a PPPOE protocol packet or a DHCP protocol packet. The opposite end associated information is the associated information about the OLT, the ONU and the user port information.

In step 4, when the user port of the ONU sends the IPTV service request packet carrying the user port information to the OLT, the following step is performed: the OLT queries the MAC address database according to the data packet identifier to obtain the user port information, so as to realize the centralized control of the user port on the ONU.

Prior to step 1, the method further comprises: in the OLT, the MAC address database is created for the ONU, wherein, the index of the MAC address database is the packet identifier. The IPTV service request packet is an IGMP protocol packet or a report packet, and the packet identifier is MAC+VLAN information.

The present invention also provides a device for centralized controlling IPTV service, which comprises: a user information sending unit, adapted to, when a user initiates a service interaction, acquire user port information of the user, put the user port information into an interacting allocation protocol packet and send the packet to the OLT; an associated information generating unit, adapted to extract the user port information according to the received interacting allocation protocol packet, generate opposite end associated information according to the user port information, and store the opposite end associated information into a MAC address database using a data packet identifier of the interacting allocation protocol packet as an index; a service interacting unit, adapted to query the MAC address database according to the data packet identifier to obtain the user port information when the OLT receives an IPTV service request packet sent by the user port of the ONU, and thus the OLT realizing the centralized control of the user ports on the ONU.

Wherein, the interacting allocation protocol packet is a PPPOE protocol packet or a DHCP protocol packet. The opposite end associated information is the associated information about the OLT, the ONU and the user port information.

In addition, when the user port of the ONU sends the IPTV service request packet carrying the user port information to the OLT, the service interacting unit is further adapted to query the MAC address database to obtain the user port information according to the data packet identifier.

The device of the present invention further comprises: a database creating unit, adapted to create the MAC address database for the ONU in the OLT, wherein, the index of the MAC address database is the packet identifier.

Wherein, the IPTV service request packet is an IGMP protocol packet or a report packet, and the packet identifier is MAC+VLAN information.

Therefore, through the present invention, it can be successfully solved that individual set-top boxes are controlled under various IPTV service permission for the case that there is an ONU with a plurality of user ports for connecting with different set-top boxes in an xPON network, and the key problem of identifying the user port of the ONU is solved. The present invention has a key importance to the large scale commercial application of the xPON, and has a determinative effect on the centralized control to the IPTV by the OLT in the case of OLT+small DSLAM networking condition of the xPON plus remote small DSLAM.

Other features and advantages of the present invention will be described in the following description and partly clear from the description, or learnt by implementing the present invention. The objects and other advantages of the present invention can be realized and obtained through the structures indicated by the specification, claims and drawings.

### Brief Description of the Drawings

Drawings are provided for the further understanding of the present invention and constitute a part of the specification, which are used to explain the present invention together with embodiments of the present invention rather than limit the present invention, wherein,
Fig.1 is a flow chart showing the method of centralized controlling IPTV service according to the present invention;
Fig.2 is a networking diagram showing the realization of the centralized control to IPTV service by the OLT utilizing PPPOE+ and DHCP Option82 of the ONU in an xPON network;
Fig.3 is a schematic view of realizing centralized control to IPTV service on the OLT side in the networking circumstance of Fig.2;
Fig.4 is a block diagram showing the device for centralized controlling IPTV service according to the present invention.

### Detailed Description of the Embodiments

The embodiments of the present invention will be described in connection with drawings. It should be understood that the preferred embodiments are provide for the purpose of illustrating and explaining rather than limiting the present invention.

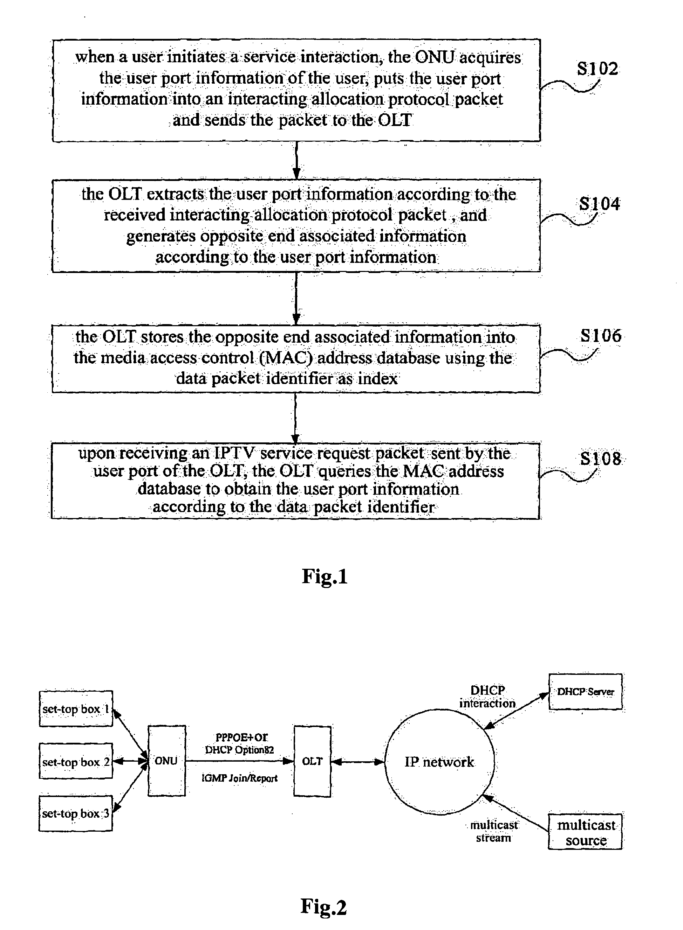

Fig.1 is a flow chart showing the method of centralized controlling IPTV service according to the present invention. As shown in Fig.1, the method comprises the following steps:
Step S102, when a user initiates a service interaction, the ONU acquires the user port information of the user, puts the user port information into an interacting allocation protocol packet and sends the packet to the OLT;
Step S104, the OLT extracts the user port information according to the received interacting allocation protocol packet, and generates opposite end associated information according to the user port information;
Step S106, the OLT stores the opposite end associated information into the media access control (MAC) address database using a data packet identifier of the interacting allocation protocol packet as an index; and
Step S108, upon receiving an IPTV service request packet sent by the user port of the ONU, the OLT queries the MAC address database to obtain the user port information according to the data packet identifier of the IPTV service request packet, and thus the OLT realizing the centralized control of the user ports on the ONU.

Wherein, the interacting allocation protocol packet is a PPPOE protocol packet or a DHCP protocol packet. The opposite end associated information is the associated information about the OLT, the ONU and the user port information.

In Step S108, when the user port of the ONU sends the IPTV service request packet carrying the user port information to the OLT, the following process is performed: the OLT queries the MAC address database according to the data packet identifier to obtain the user port information, so as to realize the centralized control of the user port on the ONU.

Prior to Step S102, the method further comprises: in the OLT, a MAC address database is created for the ONU, wherein, the index of the MAC address database is the packet identifier. The IPTV service request packet is an IGMP protocol packet or a report packet, and the packet identifier is MAC+VLAN information.

Therefore, in the present invention, at first the PPPOE+ or DHCP option82 function is enabled on the ONU according to the manner that the user set-top box acquires IP address, and the user port information of the ONU is carried by the Option82 protocol field passes.

Next, the OLT extracts the PPPOE and DHCP field and extracts the Option82 filed to parse and obtain the user port information of ONU, and then an associated relationship of OLT+ONU+user port information is created according to the MAC+VLAN field of the packet.

Then, for the IGMP Join or report packet of the user set-top box, on the OLT, the port information of the user ONU according to the MAC+VLAN of the packet is found to realize IPTV service control.

Alternatively, on the OLT, a MAC address database is first created on the ONU indexed with MAC+VLAN, wherein each item contains OLT+ONU+user port. The OLT processes the PPPOE and DHCP protocol on the user side, extracts the user port information from Option82 field and stores it in the MAC address database of the ONU.

During processing the IGMP protocol on access side, the user port of the ONU is acquired based on the MAC+VLAN of the IGMP, the IPTV service identifies the user port, and thus the OLT realizes a centralized control to the IPTV.

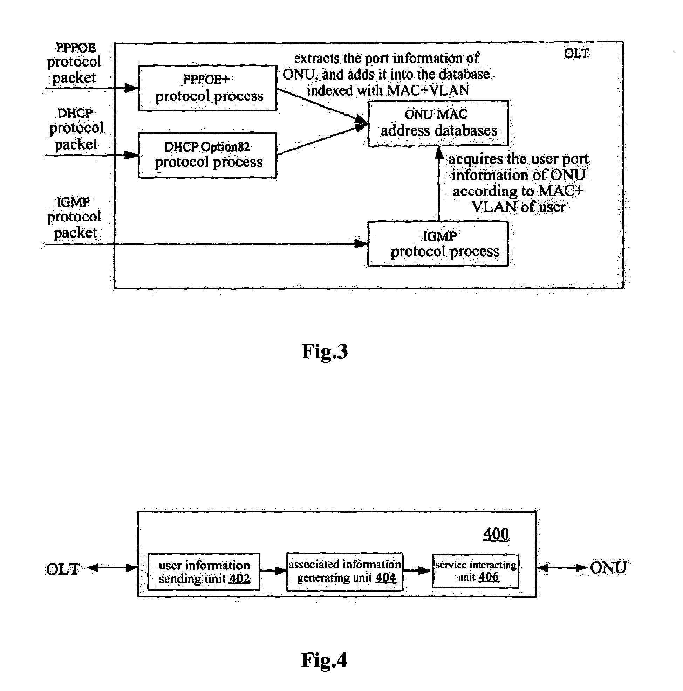

Fig.2 is a networking diagram making the OLT realize the centralized control on IPTV service by utilizing PPPOE+ and DHCP Option82 of ONU in an xPON network. Fig.3 is a schematic view of realizing centralized control on IPTV service at OLT side in the networking circumstance of Fig.2. The following description is provided by combining Figs. 2 with 3.

In Fig.3, the process thereof comprises the following constituted parts,
the MAC address database of ONU, wherein, the MAC+VLAN is used as index and each item contains the OLT+ONU+user port information;
PPPOE protocol process, wherein, the PPPOE packet on the user side is processed, Option82 field is extracted, the ONU port of the ONU is analyzed, and then OLT+ONU+user port information is stored in the MAC address database of the ONU by using MAC+VLAN of the user data packet as index;
DHCP protocol process, wherein, the DHCP packet at user side is processed, Option82 field is extracted, the ONU port of the ONU is analyzed, and then OLT+ONU+user port information is stored in the MAC address database of the ONU by using MAC+VLAN of the user data packet as index; and
IGMP protocol process, wherein the IGMP packet at user side is processed, based on the MAC+VLAN of the user data packet, the MAC address database of the ONU, or the user port information of the ONU, the OLT realize centralized control on the IPTV.

Referring to Fig.3, if the user IP address is acquired via DHCP manner, then the following processes is performed at the OLT:
1) a user initiates a service interaction, the DHCP protocol process module of the OLT extracts Option82 field and analyzes the user port of the ONU;
2) the DHCP protocol process module stores the related OLT+ONU+user port in the MAC address database of the ONU according to the MAC+VLAN of the user data packet; and
3) after acquiring the IP address, the user initiates the IGMP Join packet, the IGMP protocol process module of OLT queries the MAC address database of the ONU to obtain the user port of ONU according to the MAC+VLAN of the user data packet, and thus the OLT realizes the centralized control on the IPTV.

In addition, if the user IP address is obtained by employing PPPOE manner, then the following processes is performed at the OLT:
1) a user initiates a PPPOE interaction, the PPPOE protocol process module of the OLT extracts Option82 field and analyzes the user port of the ONU;
2) the PPPOE protocol process module stores the related OLT+ONU+user port in the MAC address database of the ONU according to the MAC+VLAN of the user data packet; and
3) after acquiring the IP address, the user initiates the IGMP Join packet, the IGMP protocol process module of OLT queries the MAC address database of the ONU to obtain the user port of ONU according to the MAC+VLAN of the user data packet, and thus the OLT realizes the centralized control on the IPTV.

Fig.4 is a block diagram showing the device 400 for centralized controlling IPTV service according to the present invention. As shown in Fig.4, the device 400 comprises: a user information sending unit 402, adapted to, when a user initiates a service interaction, acquire user port information of the user, put the user port information into an interacting allocation protocol packet and send the packet to the OLT; an associated information generating unit 404, adapted to extract the user port information according to the received interacting allocation protocol packet, generate opposite end associated information according to the user port information, and store the generated opposite end associated information into a MAC address database by using a data packet identifier of the interacting allocation protocol packet as an index; a service interacting unit 406, adapted to query the MAC address database according to the data packet identifier to obtain the user port information when the OLT receives an IPTV service request packet sent by the user port of the ONU, and thus the OLT realizing the centralized control of the user ports on the ONU.

Wherein, the interacting allocation protocol packet is a PPPOE protocol packet or a DHCP protocol packet. The opposite end associated information is the associated information about the OLT, the ONU and the user port information.

In addition, when the user port of the ONU sends the IPTV service request packet carrying the user port information to the OLT, the service interacting unit 406 further is adapted to query the MAC address database to obtain the user port information according to the data packet identifier.

The device of the present invention also comprises a database creating unit, adapted to create the MAC address database for the ONU in the OLT, wherein, the index of the MAC address database is the packet identifier.

Wherein, the IPTV service request packet is an IGMP protocol packet or a report packet, and the packet identifier is MAC+VLAN information.

Therefore, through the present invention, it can be successfully solved that individual set-top boxes are controlled under various IPTV service permission for the case that there is an ONU with a plurality of user ports for connecting with different set-top boxes in an xPON network, and the key problem of identifying the user port of the ONU is solved. The present invention has a key importance to the large scale commercial application of the xPON, and has a determinative effect on the centralized control to the IPTV by the OLT, in the case of OLT+small DSLAM networking condition of the xPON plus remote small DSLAM.

Above description is to illustrate the preferred embodiments not limit the present invention. Various alterations and changes to the present invention are apparent to those skilled in the art.

## Claims

1. A method for centralized controlling IPTV service used in an xPON network to centralized control user ports on the optical network unit, ONU, side by an optical line terminal, OLT, **characterized by**, comprising the following steps:
step 1, when a user initiates a service interaction, the ONU acquiring user port information of the user, putting the user port information into an interacting allocation protocol packet and sending the packet to the OLT (S102);
step 2, the OLT extracting the user port information according to the received interacting allocation protocol packet, and generating opposite end associated information according to the user port information (S104);
step 3, the OLT storing the opposite end associated information into a MAC address database using a data packet identifier **of the interacting allocation protocol** packet as an index (S106); and
step 4, upon receiving an IPTV service request packet sent by the user port of the ONU, the OLT querying the MAC address database to obtain the user port information according to the data packet identifier **of the IPTV service request** packet, and thus the OLT realizing the centralized control of the user ports on the ONU (S108).

2. The method for centralized controlling IPTV service according to Claim 1, **characterized in that** the interacting allocation protocol packet is a PPPOE protocol packet or a DHCP protocol packet.

3. The method for centralized controlling IPTV service according to Claim 1, **characterized in that** the opposite end associated information is the associated information about the OLT, the ONU and the user port information.

4. The method for centralized controlling IPTV service according to Claim 1, **characterized in that**, in step 4, when the user port of the ONU sends the IPTV service request packet carrying the user port information to the OLT, the following step is performed,
the OLT querying the MAC address database according to the data packet identifier to obtain the user port information, so as to realize the centralized control of the user port on the ONU.

5. The method for centralized controlling IPTV service according to Claim 1, **characterized by**, prior to step 1, further comprising:
in the OLT, creating the MAC address database for the ONU, wherein, the index of the MAC address database is the packet identifier.

6. The method for centralized controlling IPTV service according to any one of previous Claims, **characterized in that**
the IPTV service request packet is an IGMP protocol packet or a report packet, and
the packet identifier is MAC+VLAN information.

7. A device for centralized controlling IPTV service used in an xPON network to centralized control user ports on the optical network unit, ONU, side by an optical line terminal, OLT, **characterized by** comprising:
a user information sending unit (402), adapted to, when a user initiates a service interaction, acquire user port information of the user, put the user port information into an interacting allocation protocol packet and send the packet to the OLT;
an associated information generating unit (404), adapted to extract the user port information according to the received interacting allocation protocol packet, generate opposite end associated information according to the user port information, and store the generated opposite end associated information into a MAC address database using a data packet identifier of the interacting allocation protocol packet as an index; and
a service interacting unit (406), adapted to query the MAC address database according to the data packet identifier to obtain the user port information when the OLT receives an IPTV service request packet sent by the user port of the ONU, and thus the OLT realizing the centralized control of the user ports on the ONU.

8. The device according to Claim 7, **characterized in that** the interacting allocation protocol packet is a PPPOE protocol packet or a DHCP protocol packet.

9. The device according to Claim 7, **characterized in that** the opposite end associated information is the associated information about the OLT, the ONU and the user port information.

10. The device according to Claim 7, **characterized in that**, when the user port of the ONU sends the IPTV service request packet carrying the user port information to the OLT, the service interacting unit is further adapted to query the MAC address database to obtain the user port information according to the data packet identifier.

11. The device according to Claim 7, **characterized by**, further comprising:
a database creating unit, adapted to create the MAC address database for the ONU in the OLT,
wherein the index of the MAC address database is the packet identifier.

12. The device according to any one of Claims 8-11, **characterized in that**
the IPTV service request packet is an IGMP protocol packet or a report packet, and
the packet identifier is MAC+VLAN information.

## Patentansprüche

1. Verfahren zur zentralisierten Steuerung eines IPTV-Dienstes, verwendet in einem xPON-Netzwerk zur zentralisierten Steuerung von Benutzeranschlüssen an der optischen Netzwerkeinheit ONU neben einem Optical Line Terminal OLT, **dadurch gekennzeichnet, dass** es folgende Schritte umfasst:
Schritt 1, in dem bei Einleitung einer Dienstinteraktion durch den Benutzer die ONU eine Benutzeranschlussinformation des Benutzers bezieht, die Benutzeranschlussinformation in ein interagierendes Zuweisungsprotokollpaket platziert und das Paket an das OLT sendet (S102);
Schritt 2, in dem das OLT die Benutzeranschlussinformation gemäß dem empfangenen interagierenden Zuweisungsprotokollpaket entnimmt und mit dem entgegengesetzten Ende assoziierte Information gemäß der Benutzeranschlussinformation generiert (S104);
Schritt 3, in dem das OLT die mit dem entgegengesetzten Ende assoziierte Information, unter Verwendung eines Datenpaketidentifikators des interagierenden Zuweisungsprotokollpakets als Index, in einer MAC-Adressdatenbank speichert (S106);
Schritt 4, in dem, bei Empfang eines vom Benutzeranschluss der ONU gesendeten IPTV-Dienstanfragepakets, das OLT die MAC-Adressdatenbank abfragt, um die Benutzeranschlussinformation gemäß dem Datenpaketidentifikator des IPTV-Dienstanfragepakets zu erhalten, sodass die zentralisierte Steuerung der Benutzeranschlusse auf der ONU realisiert wird (S 108).

2. Verfahren zur zentralisierten Steuerung eines IPTV-Dienstes nach Anspruch 1, **dadurch gekennzeichnet, dass** das interagierende Zuweisungsprotokollpaket ein PPPOE-Protokollpaket oder ein DHCP-Protokollpaket ist.

3. Verfahren zur zentralisierten Steuerung eines IPTV-Dienstes nach Anspruch 1, **dadurch gekennzeichnet, dass** die mit dem entgegengesetzten Ende assoziierte Information die assoziierte Information über das OLT, die ONU und die Benutzeranschlussinformation ist.

4. Verfahren zur zentralisierten Steuerung eines IPTV-Dienstes nach Anspruch 1, **dadurch gekennzeichnet, dass** in Schritt 4, wenn der Benutzeranschluss der ONU das IPTV-Dienstanfragepaket sendet, welches die Benutzeranschlussinformation zu dem OLT überträgt, der Schritt ausgeführt wird, in dem:
das OLT die MAC-Adressdatenbank gemäß dem Datenpaketidentifikator abfragt, um die Benutzeranschlussinformation zu erhalten, sodass die zentralisierte Steuerung des Benutzeranschlusses an der ONU realisiert wird.

5. Verfahren zur zentralisierten Steuerung eines IPTV-Dienstes nach Anspruch 1, **dadurch gekennzeichnet, dass** es vor Schritt 1 weiter umfasst, dass:
in dem OLT die MAC-Adressdatenbank für die ONU erstellt wird, wobei der Index der MAC-Adressdatenbank der Paketidentifikator ist.

6. Verfahren zur zentralisierten Steuerung eines IPTV-Dienstes nach einem der vorhergehenden Ansprüche, **dadurch gekennzeichnet, dass** das IPTV-Dienstanfragepaket ein IGMP-Protokollpaket oder ein Berichtpaket ist und der Paketidentifikator eine MAC-VLAN-Information ist.

7. Einrichtung zur zentralisierten Steuerung eines IPTV-Dienstes, verwendet in einem xPON-Netzwerk zur zentralisierten Steuerung von Benutzeranschlüssen auf der optischen Netzwerkeinheit ONU neben einem Optical Line Terminal OLT, **dadurch gekennzeichnet, dass** sie Folgendes umfasst:
eine Benutzerinformation-Sendeeinheit (402), geeignet, um bei Einleitung einer Dienstinteraktion durch den Benutzer eine Benutzeranschlussinformation des Benutzers zu beziehen, die Benutzeranschlussinformation in ein interagierendes Zuweisungsprotokollpaket zu platzieren und das Paket an das OLT zu senden;
eine Generierungseinheit für assoziierte Information (404), geeignet um die Benutzeranschlussinformation gemäß dem empfangenen interagierenden Zuweisungsprotokollpaket zu entnehmen, eine mit dem entgegengesetzten Ende assoziierte Information gemäß der Benutzeranschlussinformation zu erzeugen und die mit dem entgegengesetzten Ende assoziierte Information, unter Verwendung eines Datenpaketidentifikators des interagierenden Zuweisungsprotokollpakets als Index in einer MAC-Adressdatenbank zu speichern; und
eine Dienstinteraktionseinheit (406), geeignet zum Abfragen der MAC-Adressdatenbank gemäß dem Datenpaketidentifikator, um die Benutzeranschlussinformation zu erhalten, wenn das OLT ein vom Benutzeranschluss der ONU gesendetes IPTV-Dienstanfragepaket empfängt, und so das OLT die zentralisierte Steuerung der Benutzeranschlüsse auf der ONU realisiert.

8. Einrichtung nach Anspruch 7, **dadurch gekennzeichnet, dass** das interagierende Zuweisungsprotokollpaket ein PPPOE-Protokollpaket oder ein DHCP-Protokollpaket ist.

9. Einrichtung nach Anspruch 7, **dadurch gekennzeichnet, dass** die mit dem entgegengesetzten Ende assoziierte Information die assoziierte Information über das OLT, die ONU und die Benutzeranschlussinformation ist.

10. Einrichtung nach Anspruch 7, **dadurch gekennzeichnet, dass**, wenn der Benutzeranschluss der ONU das IPTV-Dienstanfragepaket sendet, das die Benutzeranschlussinformation an den OLT überträgt, die Dienstinteraktionseinheit ferner geeignet ist, die MAC-Adressdatenbank abzufragen, um die Benutzeranschlussinformation gemäß dem Datenpaketidentifikator zu erhalten.

11. Einrichtung nach Anspruch 7, **dadurch gekennzeichnet, dass** sie ferner umfasst:
eine Datenbankerstellungseinheit, geeignet zum Erstellen der MAC-Adressdatenbank für die ONU im OLT,
wobei der Index der MAC-Adressdatenbank der Paketidentifikator ist.

12. Einrichtung nach einem der Ansprüche 8-11, **dadurch gekennzeichnet, dass**
das IPTV-Dienstanfragepaket ein IGMP-Protokollpaket oder ein Berichtpaket ist, und
der Paketidentifikator eine MAC-VLAN-Information ist.

## Revendications

1. Procédé pour commander de manière centralisée un service IPTV utilisé dans un réseau xPON pour commander de manière centralisée des ports d'utilisateur du côté de l'unité de réseau optique, ONU, par un terminal de ligne optique, OLT, **caractérisé en ce qu'**il comprend les étapes suivantes :
étape 1, lorsqu'un utilisateur lance une interaction de service, l'ONU acquiert des informations de port d'utilisateur de l'utilisateur, place les informations de port d'utilisateur dans un paquet de protocole d'attribution interagissant et envoie le paquet à l'OLT (S102) ;
étape 2, l'OLT extrait les informations de port d'utilisateur conformément au paquet de protocole d'attribution interagissant reçu, et génère des informations associées d'extrémité opposée conformément aux informations de port d'utilisateur (S104) ;
étape 3, l'OLT mémorise les informations associées d'extrémité opposée dans une base de données d'adresses MAC en utilisant un identifiant de paquet de données du paquet de protocole d'attribution interagissant en tant qu'index (S106) ; et
étape 4, lors de la réception d'un paquet de demande de service IPTV envoyé par le port d'utilisateur de l'ONU, l'OLT interroge la base de données d'adresses MAC pour obtenir les informations de port d'utilisateur conformément à l'identifiant de paquet de données du paquet de demande de service IPTV, et ainsi l'OLT effectue la commande centralisée des ports d'utilisateur sur l'ONU (S108).

2. Procédé pour commander de manière centralisée un service IPTV selon la revendication 1, **caractérisé en ce que** le paquet de protocole d'attribution interagissant est un paquet de protocole PPPOE ou un paquet de protocole DHCP.

3. Procédé pour commander de manière centralisée un service IPTV selon la revendication 1, **caractérisé en ce que** les informations associées d'extrémité opposée sont les informations associées concernant l'OLT, l'ONU et les informations de port d'utilisateur.

4. Procédé pour commander de manière centralisée un service IPTV selon la revendication 1, **caractérisé en ce que**, à l'étape 4, lorsque le port d'utilisateur de l'ONU envoie le paquet de demande de service IPTV transportant les informations de port d'utilisateur à l'OLT, l'étape suivante est effectuée,
l'OLT interroge la base de données d'adresses MAC conformément à l'identifiant de paquet de données pour obtenir les informations de port d'utilisateur, de manière à effectuer la commande centralisée du port d'utilisateur sur l'ONU.

5. Procédé pour commander de manière centralisée un service IPTV selon la revendication 1, **caractérisé en ce qu'**il comprend en outre, avant l'étape 1 :
dans l'OLT, la création de la base de données d'adresses MAC pour l'ONU,
dans lequel, l'index de la base de données d'adresses MAC est l'identifiant de paquet.

6. Procédé pour commander de manière centralisée un service IPTV selon l'une quelconque des revendications précédentes, **caractérisé en ce que**
le paquet de demande de service IPTV est un paquet de protocole IGMP ou un paquet de rapport, et
l'identifiant de paquet consiste en les informations MAC + VLAN.

7. Dispositif pour commander de manière centralisée un service IPTV utilisé dans un réseau xPON pour commander de manière centralisée des ports d'utilisateur du côté de l'unité de réseau optique, ONU, par un terminal de ligne optique, OLT, **caractérisé en ce qu'**il comprend :
une unité d'envoi d'informations d'utilisateur (402), conçue pour, lorsqu'un utilisateur lance une interaction de service, acquérir des informations de port d'utilisateur de l'utilisateur, placer les informations de port d'utilisateur dans un paquet de protocole d'attribution interagissant et envoyer le paquet à l'OLT ;
une unité de génération d'informations associées (404), conçue pour extraire les informations de port d'utilisateur conformément au paquet de protocole d'attribution interagissant reçu, générer des informations associées d'extrémité opposée conformément aux informations de port d'utilisateur, et mémoriser les informations associées d'extrémité opposée générées dans une base de données d'adresses MAC en utilisant un identifiant de paquet de données du paquet de protocole d'attribution interagissant en tant qu'index ; et
une unité interagissant avec le service (406), conçue pour interroger la base de données d'adresses MAC conformément à l'identifiant de paquet de données pour obtenir les informations de port d'utilisateur lorsque l'OLT reçoit un paquet de demande de service IPTV envoyé par le port d'utilisateur de l'ONU, et ainsi l'OLT effectue la commande centralisée des ports d'utilisateur sur l'ONU.

8. Dispositif selon la revendication 7, **caractérisé en ce que** le paquet de protocole d'attribution interagissant est un paquet de protocole PPPOE ou un paquet de protocole DHCP.

9. Dispositif selon la revendication 7, **caractérisé en ce que** les informations associées d'extrémité opposée sont les informations associées concernant l'OLT, l'ONU et les informations de port d'utilisateur.

10. Dispositif selon la revendication 7, **caractérisé en ce que**, lorsque le port d'utilisateur de l'ONU envoie le paquet de demande de service IPTV transportant les informations de port d'utilisateur à l'OLT, l'unité interagissant avec le service est en outre conçue pour interroger la base de données d'adresses MAC pour obtenir les informations de port d'utilisateur conformément à l'identifiant de paquet de données.

11. Dispositif selon la revendication 7, **caractérisé en ce qu'**il comprend en outre :
une unité de création de base de données, conçue pour créer la base de données d'adresses MAC pour l'ONU dans l'OLT,
dans lequel l'index de la base de données d'adresses MAC est l'identifiant de paquet.

12. Dispositif selon l'une quelconque des revendications 8 à 11, **caractérisé en ce que**
le paquet de demande de service IPTV est un paquet de protocole IGMP ou un paquet de rapport, et
l'identifiant de paquet consiste en les informations MAC + VLAN.
